# EUROPEAN PATENT APPLICATION

(11) **EP 1 557 324 A2**
(43) Date of publication of application: **27.07.2005**
(21) Application number: 05000923.2
(22) Date of filing: 18.01.2005
(51) Int. Cl.: B60R 21/16

(54) **Curtain airbag**

(30) Priority: 22.01.2004 US 537917 P
(71) Applicant: TAKATA CORPORATION, Minato-ku, Tokyo 106-8510 (JP)
(72) Inventor: Teramoto, Hiroshi, Tokyo 106-8510 (JP)
(74) Representative: VOSSIUS & PARTNER

(57) **Abstract**

An airbag for protecting a vehicle occupant. The airbag (100) includes an inner panel (110) and an outer panel (120) connected to form an inflatable chamber. The airbag includes a cloth sealing element (200) connecting the periphery of the inner and outer panels; wherein the sealing element is located both inside and outside of the inflatable chamber; and wherein certain yams from the sealing element are located entirely within the inflatable chamber. The airbag may include a cloth connecting element connected to the inner and outer panels at a position away from the periphery of the panels to thereby form a non-inflatable region (170) located within the inflatable chamber.

## Description

This application claims priority to and the benefit of U.S. Provisional Application No. 60/537,917, filed January 22, 2004.

The present invention relates to an airbag for protecting an occupant of a vehicle. In particular, the present invention relates to an airbag that is suitably used as a curtain type airbag configured to deploy along the side of the vehicle interiorAn exemplary curtain type airbag is disclosed in U.S. Patent No. 6,318,753 (incorporated by reference herein in its entirety).

According to an embodiment of the present invention, a curtain type airbag for protecting an occupant of the vehicle is provided. The airbag includes outer and inner panels. The inner panel is positioned on the occupant side of the airbag. The inner and outer panels may connected by a connecting element and/or a sealing element.

It is to be understood that both the foregoing general description and the following detailed description are exemplary and explanatory only and are not restrictive of the invention as claimed.

These and other features, aspects and advantages of the present invention will become apparent from the following description, appended claims, and the accompanying exemplary embodiments shown in the drawings, which are briefly described below.

Fig. 1 is a side view of a curtain type airbag according to an embodiment of the present invention.

Fig. 2 is a sectional view of an embodiment of the present invention taken along line a-a in Fig. 1.

Fig. 3 is a sectional view of an alternative embodiment of the present invention taken along line a-a in Fig. 1.

Fig. 4 is a sectional view of an exterior seam of a curtain airbag such as disclosed in Japanese Patent Publication JP4-356249.

Fig. 5 is a sectional view of an embodiment of the present invention taken along line b-b in Fig. 1.

Fig. 6 is a sectional view of yet another embodiment of the present invention taken along line b-b in Fig. 1.

Fig. 7 is a sectional view of yet another embodiment of the present invention taken along line b-b in Fig. 1.

Fig. 8 is a sectional view of yet another embodiment of the present invention taken along line b-b in Fig. 1.

Fig. 9 is a sectional view of yet another embodiment of the present invention taken along line b-b in Fig. 1.

Fig. 10 is a sectional view of yet another embodiment of the present invention taken along line b-b in Fig. 1.

Fig. 11 is a perspective illustration of a fabric reinforcement tape according to an embodiment of the invention;

Figs. 12A and 12B are cross-sectional views taken along II-II of embodiments of the fabric reinforcement tape of Fig. 11;

Fig. 13 is a perspective illustration of a fabric reinforcement tape according to another embodiment of the invention;

Figs. 14A and 14B are cross-sectional views taken along IV-IV of embodiments of the fabric reinforcement tape of Fig. 13; and

Embodiments of the present invention will be described in detail below with reference to the drawings.

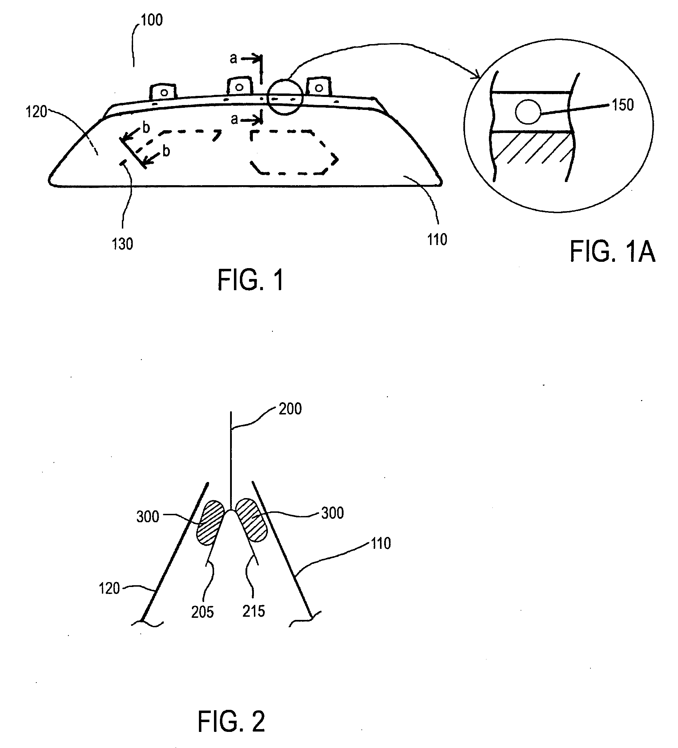

As shown in Fig. 1, according to an embodiment of the present invention, a passenger-side air bag includes 100 an inner panel 110 and an outer fabric panel 120. The panels may be connected along their peripheries. The upper edge of the air bag includes a sewn seam 140. The air bag 100 may also include an internal seam or seams 130 to divide the inflatable portion of the air bag into separate sections or cells. A gas generator (not shown) may be provided to supply inflation gas to the air bag.

Preferably, the present invention is directed to curtain type air bags. A curtain air bag is typically mounted along the side of vehicle and is configured to deploy downward from a vehicle roof rail between the occupants of the vehicle and the windows. The curtain type air bags protect a vehicle occupant during a side collision and vehicle rollover situation. Thus, the curtain must remain inflated for an extended period in order to protect the occupant. As a result, leakage of inflation gas from the air bag must be addressed. Leakage of inflation gas through the seams and connections between the panels of the airbag is of particular concern.

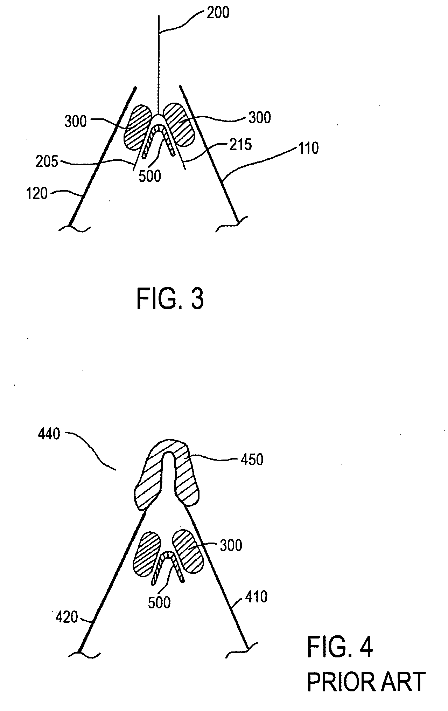

An exemplary connection between the airbag panels is shown in Fig. 4. Fig. 4 discloses an exterior seam 440 connecting an inner panel 410 and an outer panel 420 of a curtain airbag. The connection structure 440 includes a sewn seam 415 connecting the air bag panels. The exterior of the connection structure along the sewn seam 415 is coated with a sealant 450 in order to reduce gas leakage the seam 415. The interior of the connection structure is covered by a tape 500. Another typical connection structure for connecting the periphery of curtain air bag panels is disclosed in JP4-356249 (incorporated by reference herein it its entirety).

As shown in Fig. 2, according to an embodiment of the present invention, the airbag includes a sealing element 200. The sealing element 200 may comprise a cloth or tape material. The sealing element 200 preferably is forked so that each branch of the fork 205, 215 may be connected to one of the inner and outer panels. The stem 225 of the fork-shaped sealing element extends outwardly away from the interior of the airbag past the periphery of the inner and outer fabric panels.

Preferably, the sealing element 200 is connected to the fabric panels by an adhesive 300 in order to eliminate the requirement for stitching. However, the scope of the present invention includes connecting the sealing element to the fabric panel by other suitable means such as, for example, sewing, weaving, and RF welding. The sealing element increases the gas permeability of the airbag by reducing the gas leakage through conventionally stitched periphery seams that are used to connect fabric panels. Furthermore, as shown in Fig. 1, the sealing element may include a positioning hole(s) 150. The positioning holes 150 are used to properly align the airbag material during the production process.

Fig. 3 discloses an alternative embodiment of the present invention. As shown in Fig. 3, the sealing connection may include both a fork-shaped cloth 200 and a further reinforcing tape 500. The tape 500 provides a second barrier against escaping gas and further supports the fork shaped cloth to reduce the likelihood of a separation of the panels along the peripheries of the airbag 100.

Fig. 1 also discloses that the inner and outer panels may include connected portions 130 located a distance away from the peripheries of the panels. U.S. Patent No. 6,489,006 (incorporated by reference herein) discloses one example of a structure for connecting airbag fabric panels together.

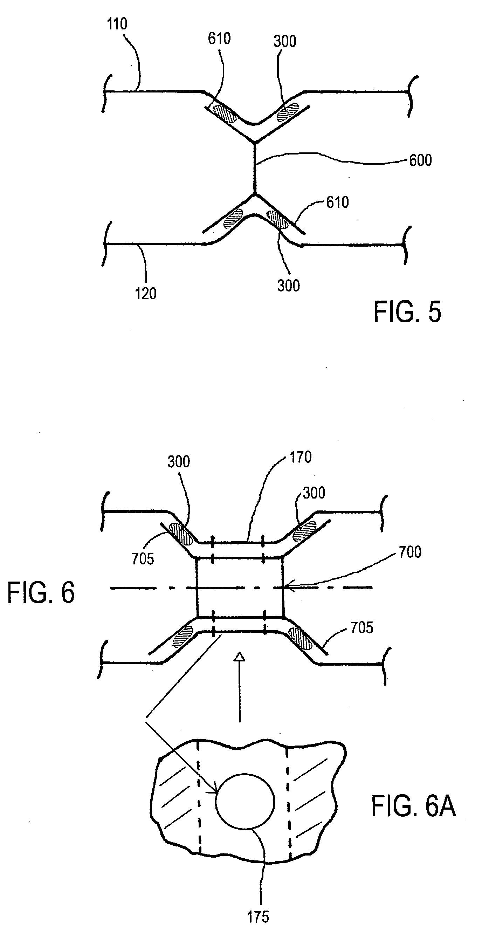

The present invention also includes connecting interior portions of the airbag panels together to form inflatable cells or regions. As shown in Fig. 5, a connecting element 600 is provided. The connecting element 600 preferably comprises a gas tight cloth. Alternatively, the connecting element may comprise a coated fabric material such as a silicone coated fabric. In yet another alternative, the connecting element 600 may comprise a sealing tape.

The connecting element is connected to both the inner fabric panel 110 and outer fabric panels 120. The connecting element 600 restricts separation of the panels 110, 120 and prevents gas flow, to thereby form inflation regions or cells. The connecting element may take any suitable shape. For example, as shown in Fig. 5, the connecting element 600 may include fork-shaped ends 610. Each of the four branches of the connecting element may be connected to one of the two fabric panels.

Preferably, the connecting element is connected to the fabric panels by an adhesive 300 in order to eliminate the requirement for stitching. However, the scope of the present invention includes connecting the sealing element to the fabric panel by other suitable means such as, for example, sewing, weaving, and RF welding.

Fig. 6 discloses yet another alternative of the present invention. As shown in Fig. 6, the connecting element 700 may have a generally rectangular in cross-section with protruding branches 705 for connecting to the fabric panels. The airbag according to the embodiment of the present invention shown in Fig. 6 may also include a non-inflatable region 170 between the branches of the connecting element. The non-inflatable region 170 may include an opening 175 that passes through the connecting element and both fabric panels. The opening or positioning hole 175 may be used to properly align the airbag material during the production process.

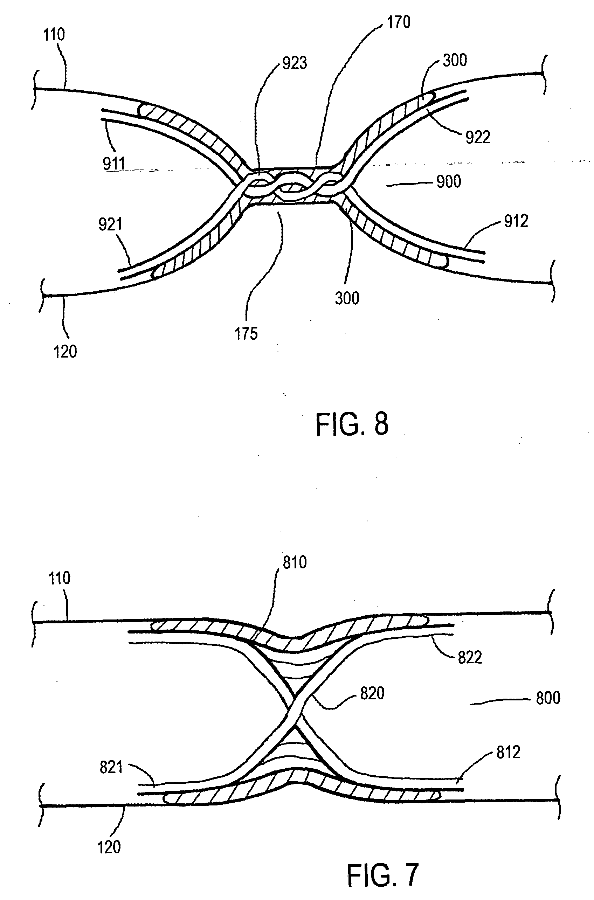

As shown in Fig. 7, an alternative embodiment of the present invention includes a connecting element 800 for connecting the inner fabric panel 110 with the outer fabric panel 120. The connecting element 800 may include a first connecting cloth 810 and a second connecting cloth 820. The connecting cloths 810, 820 intersect to form an X-shaped connecting element 800. The connecting cloths 810, 820 may be coated on one of both sides with a sealing material such as, for example, silicone.

Preferably, the connecting element 800 is connected to the fabric panels by an adhesive 300 in order to eliminate the requirement for stitching. However, the scope of the present invention includes connecting the sealing element to the fabric panel by other suitable means such as, for example, sewing, weaving, and RF welding.

Each of the connecting cloths 810, 820 include warp and weft yams. Depending on the orientation of the connecting cloths either the warp or the weft yams extend through the connecting element. For example, according to one embodiment of the present invention, the warp yams extend from one end 811 to another end 812 of the first connecting cloth 810. Similarly, the warp yams extend from one end 821 to another end 822 of the second connecting cloth 820.

According to an embodiment of the present invention, a portion of the warp yams extend from one end 811 of the first connecting cloth 810 to the other end 822 of the second connecting cloth 820. Similarly, a portion of the warp yams extend from one end 821 of the second connecting cloth 820 to the other end 812 of the first connecting cloth 810. Preferably, the number of yams extend from one connecting cloth to the other connecting cloth (e.g., from a first end 811 of the first connecting cloth 810 to another end 822 of the second connecting cloth 820) is less than the number of yams extending within the same connecting cloth. As mentioned above, the aforementioned description of the intertwining of the warp yams is exemplary, the scope of the present invention could include a similar arrangement for the weft yams, depending on the orientation of the connecting cloths.

As shown in Fig. 8, an alternative embodiment of the present invention includes a connecting element 900 for connecting the inner fabric panel 110 with the outer fabric panel 120. The connecting element 900 may include a first connecting cloth 910 and a second connecting cloth 920. The connecting cloths may be coated on one of both sides with a sealing material such as, for example, silicone.

The yarns from the connecting cloths 910, 920 intersect to form a single layer planar region 923. The yams extending from one end 911 of the first connecting cloth 910 pass through the planar region 923 and extend to a second end 912 of the first connecting cloth 910. Similarly, the yams from one end 921 of the second connecting cloth 920 extend through the planar region 923 and extend to a second end 922 of the second connecting cloth.

Preferably, the connecting element 900 is connected to the fabric panels by an adhesive 300 in order to eliminate the requirement for stitching. However, the scope of the present invention includes connecting the sealing element to the fabric panel by other suitable means such as, for example, sewing, weaving, and RF welding.

The non-inflatable region 170 of the airbag includes the planar region 923 and may include an opening 175 that passes through the planar region 923 and both fabric panels. The opening or positioning hole 175 may be used to properly align the airbag material during the production process.

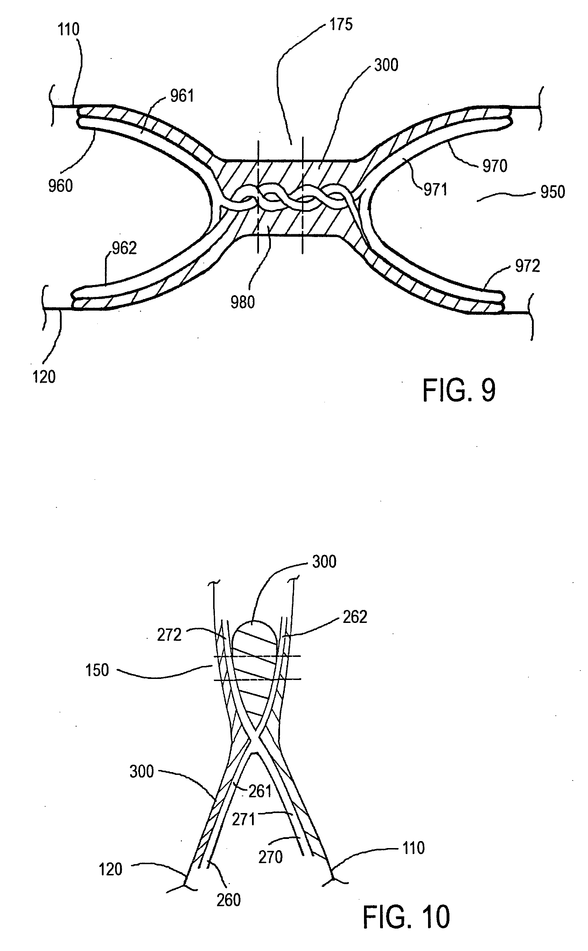

As shown in Fig. 9, an alternative embodiment of the present invention includes a connecting element 950 for connecting the inner fabric panel 110 with the outer fabric panel 120. The connecting element 950 may include a first connecting cloth 960 and a second connecting cloth 970. The connecting cloths may be coated on one of both sides with a sealing material such as, for example, silicone.

The yams from the connecting cloths 960, 970 intersect to form a single layer planar region 980. Yams extend from one end 961 of the first connecting cloth 960 pass through the planar region 980 and extend to a second end 972 of the first connecting cloth 910. In addition, yams from one end 961 of the first connecting cloth 960 extend to a second end 972 of the second connecting cloth 970. Similarly, yams extend from one end 971 of the second connecting cloth 970 pass through the planar region 980 and extend to a second end 972 of the second connecting cloth 970. In addition, yams from one end 971 of the second connecting cloth 970 extend to a second end 972 of the second connecting cloth 970.

Preferably, the connecting element 950 is connected to the fabric panels by an adhesive 300 in order to eliminate the requirement for stitching. However, the scope of the present invention includes connecting the sealing element to the fabric panel by other suitable means such as, for example, sewing, weaving, and RF welding.

The non-inflatable region 170 of the airbag includes the planar region 980 and may include an opening 175 that passes through the planar region 980 and both fabric panels. The opening or positioning hole 175 may be used to properly align the airbag material during the production process.

As shown in Fig. 10, according to an embodiment of the present invention, the airbag includes a sealing element 250. The sealing element 250 is positioned to seal the periphery of the air bag. The sealing element may comprise a cloth material. The sealing element 250 discloses two intertwined sealing cloths 260, 270. The sealing cloths 260, 270 intersect to form the X-shaped connecting element 250.

Preferably, the sealing element 250 is connected to the fabric panels by an adhesive 300 in order to eliminate the requirement for stitching. However, the scope of the present invention includes connecting the sealing element to the fabric panel by other suitable means such as, for example, sewing, weaving, and RF welding.

Each of the sealing cloths 260, 270 include warp and weft yams. Depending on the orientation of the sealing cloths either the warp or the weft yams extend through the sealing element. For example, according to one embodiment of the present invention, the warp yams extend from one end 261 to another end 262 of the first sealing cloth 260. Similarly, the warp yams extend from one end 271 to another end 272 of the second sealing cloth 270.

According to an embodiment of the present invention, a portion of the warp yams extend from one end 261 of the first sealing cloth 260 to one end 271 of the second sealing cloth 820. Similarly, a portion of the warp yams extend from one end 271 of the second sealing cloth 270 to one end of the first sealing cloth 260. Preferably, the number of yams extend from one sealing cloth to the other sealing cloth (e.g., from a first end 261 of the first sealing cloth 260 to a first end 271 of the second sealing cloth 270) is greater than the number of yams extending within the same sealing cloth. As a result the is more sealing cloth located in the inflatable portion of the airbag. As mentioned above, the aforementioned description of the intertwining of the warp yams is exemplary, the scope of the present invention could include a similar arrangement for the weft yams, depending on the orientation of the sealing cloths.

The sealing element increases the gas permeability of the airbag by reducing the gas leakage through conventionally stitched periphery seams that are used to connect fabric panels. Furthermore, as shown in Fig. 10, the sealing element 250 may include a positioning hole(s) 150. The positioning holes 150 are used to properly align the airbag material during the production process.

According to an embodiment of the present invention, a curtain type airbag may include a peripheral sealing element and/or an internal connecting element. The scope of the present invention further includes providing a plurality of sealing elements in a curtain airbag. Similarly, the scope of the present invention includes providing multiple connecting elements so that multiple inflatable portions of cells may be provided in an airbag.

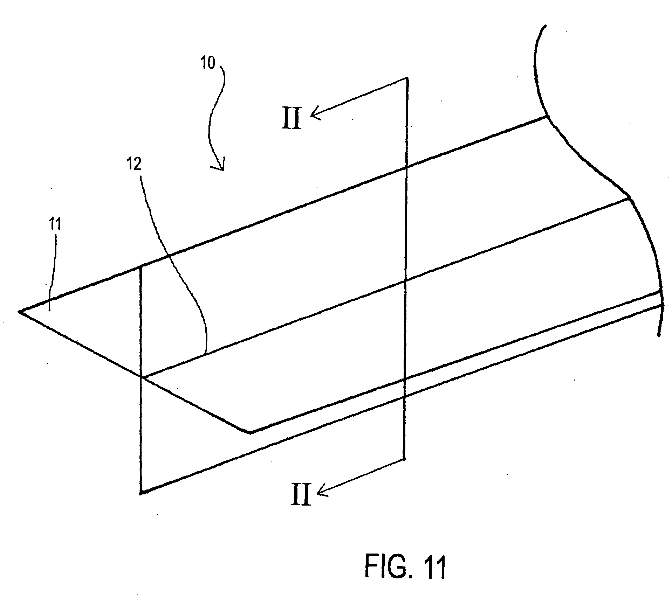

Figs. 11-15 disclose various embodiments of connecting and sealing element for use with airbags 100 having two panels 110, 120 such as described above. For example, although not shown in the drawings, adhesive 300 may also be provided to connect the below described connecting element to the airbag panels.

Referring to Fig. 11, an alternative embodiment of the connecting element 10 is illustrated. The illustrated embodiment of the connecting element 10 includes four flaps, such as flap 11 extending from an intersection 12. In a preferred embodiment, each flap extends at least 1 mm from the intersection. Most preferably, the flaps extend about 15 mm from the intersection.

When the connecting element 10 is implemented for reinforcing a fabric seam, for example, each flap engages one surface of the pair of fabric segments forming the seam. Two such configurations are illustrated in Figs. 15A and 15B and are described below in greater detail.

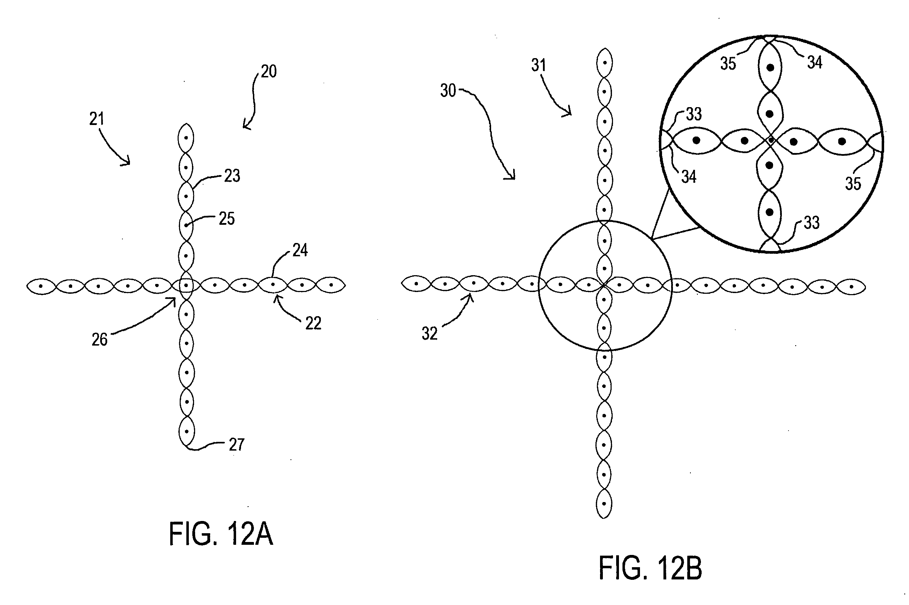

Referring now to Figs. 12A and 12B, embodiments of the weaved structure of the connecting element. Fig. 12A is a cross-sectional view of one weaved configuration of a connecting element similar to that illustrated in Fig. 11. The weaved configuration of the connecting element 20 includes a vertical weft arrangement 21 and a horizontal weft arrangement 22 that form the four flaps of the connecting element. The vertical weft arrangement 21 extends through the intersection 26 to form the two opposing vertical flaps of the connecting element 20. Similarly, the horizontal weft arrangement 22 extends through the intersection 26 to form the two opposing horizontal flaps.

The vertical weft arrangement 21 is formed by a plurality of weft threads 23. Similarly, the horizontal weft arrangement 22 is formed by a plurality of weft threads 24. The weft threads 23, 24 are interlaced with warp threads 25 therebetween. The warp threads 25 extend in a longitudinal direction of the connecting element, the longitudinal direction being perpendicular to the plane of the weft arrangements 21, 22.

In the embodiment illustrated in Fig. 12A, all weft threads 25 of a particular flap extend through the intersection 26 to the opposing flap. Thus, the weft thread 23 extends through the intersection 26 to each of the opposing vertical flaps. Similarly, the weft thread 24 extends through the intersection 26 to each of the opposing horizontal flaps.

Preferably, the free ends 27 of each flap are resistant to unraveling. This may be achieved in any of a number of ways commonly known to those skilled in the art. For example, a separate stitching in the longitudinal direction of the tape 20 may be provided along the free end 27 of each flap to prevent unraveling.

It will be understood by those skilled in the art that while the figures illustrate the weft arrangement of each flap having only a few cycles and few warp threads interlaced therebetween, any number and density of weft cycles and warp threads may be used. Preferably, each flap is at least 1 mm in length and includes at least 5 weft cycles and warp threads. Most preferably, each flap is about 15 mm in length and includes about 7 weft cycles and warp threads.

Referring now to Fig. 12B, a variation of the weave configuration illustrated in Fig. 12A will now be described. The weave configuration of the connecting element 30 is similar to that of the connecting element 20 in Fig. 12A and includes a vertical weft arrangement 31 and a horizontal weft arrangement 32. The weft arrangements 31, 32 include weft threads with warp threads interlaced therebetween. In the embodiment illustrated in Fig. 12B, the weft threads of a particular flap do not extend to the opposing flap. Rather, as illustrated in the detailed view in Fig. 12B, the weft threads of each flap separate at the intersection and extend to each of the adjacent flaps. Thus, the weft arrangement of the left flap includes weft threads 33, 34. One weft thread 33 extends through the intersection to the adjacent flap extending downward, while the other weft thread 34 extends through the intersection to the adjacent flap extending upward. Thus, the flap extending upward has a weft arrangement which includes the weft thread 34 from the left flap and another weft thread 35. The weft thread 35 extends through the intersection to the adjacent flap extending rightward.

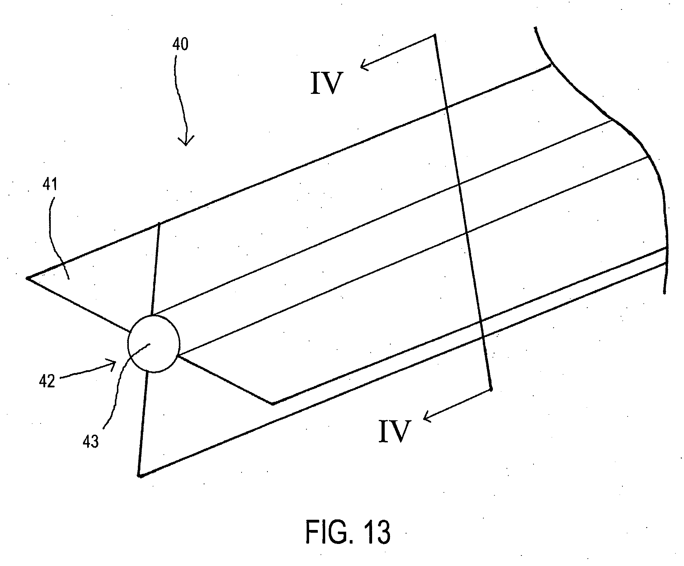

Referring now to Fig. 13, a connecting element according to another embodiment of the present invention is illustrated. The illustrated connecting element 40 is similar to the connecting element 10 shown in Fig. 11 in that the connecting element 40 is provided with four flaps, such as flap 41 extending outwardly. Unlike the embodiment of Fig. 11, the tape 40 of Fig. 13 includes a central region 42 having a filler 43 configured as a cylinder with its axis aligned with the longitudinal axis of the connecting element 40.

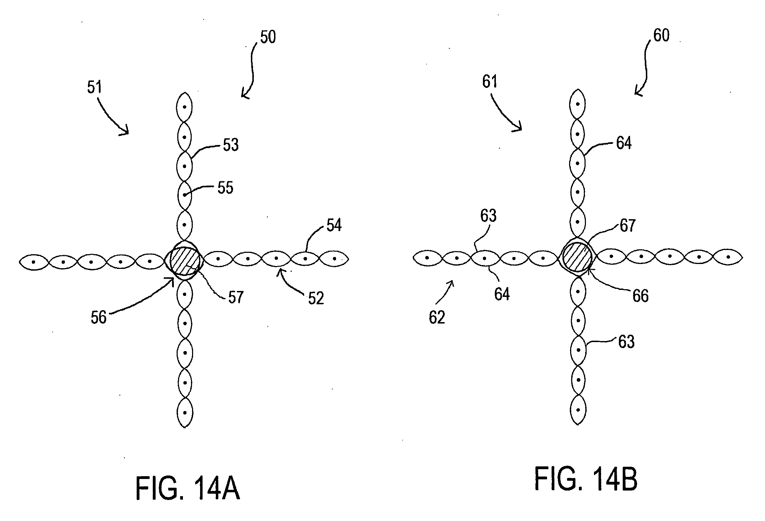

Figs. 14A and 14B illustrate cross-sectional views of embodiments of weave configurations for the tape illustrated in Fig. 13. Referring now to Fig. 14A, the weave configuration of the connecting element 50 includes a vertical weft arrangement 51 and a horizontal weft arrangement 52 that form the four flaps of the connecting element 50. The vertical weft arrangement 51 extends around the central region 56 to form the two opposing vertical flaps of the connecting element 50. Similarly, the horizbntal weft arrangement 52 extends around the central region 56 to form the two opposing horizontal flaps.

The vertical weft arrangement 51 is formed by a plurality of weft threads 53. Similarly, the horizontal weft arrangement 52 is formed by a plurality of weft threads 54. The weft threads 53, 54 are interlaced with warp threads 55 therebetween.

In the embodiment illustrated in Fig. 14A, all weft threads 53, 54 of a particular flap extend around the central region 56 to the opposing flap. In extending around the central region 56, the weft threads of each flap may separate. For example, the two threads forming the weft arrangement 51 separate, with each thread extending around a different side of the central region 56, and rejoin on the opposing flap side of the central region 56. At the central region 56, the weft threads may be interlaced with either the filler 57, a central thread (not shown), or the other weft threads.

The filler 57 may include any number of materials. For example, the filler 57 may be formed of a textile material such as wool, or it may be made of a solid rubber or soft plastic material.

Referring now to Fig. 14B, a variation of the weave configuration illustrated in Fig. 14A will now be described. The weave configuration of the connecting element 60 is similar to that of the connecting element 50 in Fig. 14A and includes a vertical weft arrangement 61 and a horizontal weft arrangement 62. The weft arrangements 61, 62 include weft threads with warp threads interlaced therebetween. In the embodiment illustrated in Fig. 14B, the weft threads of a particular flap do not extend to the opposing flap. Rather, similar to the embodiment of Fig. 12B, the weft threads of each flap separate at the central region 66 and extend to each of the adjacent flaps. Thus, the weft arrangement of the left flap includes weft threads 63, 64. One weft thread 63 extends around the central region 66 to the adjacent flap extending downward, while the other weft thread 64 extends around the central region 66 to the adjacent flap extending upward. Thus, the flap extending upward has a weft arrangement which includes the weft thread 64 from the left flap and another weft thread.

Given the disclosure of the present invention, one versed in the art would appreciate that there may be other embodiments and modifications within the scope and spirit of the invention. Accordingly, all modifications attainable by one versed in the art from the present disclosure within the scope and spirit of the present invention are to be included as further embodiments of the present invention.

## Claims

1. An airbag for protecting a vehicle occupant comprising:
an inner panel and an outer panel connected to form an inflatable chamber;
a cloth sealing element connecting the periphery of the inner and outer panels;
wherein the sealing element is located both inside and outside of the inflatable chamber; and wherein certain yams from the sealing element are located entirely within the inflatable chamber.

2. The airbag of claim 1, wherein the sealing element includes a hole located outside of the inflatable chamber for positioning the airbag.

3. The airbag of claim 1 or 2, wherein the sealant element is adhesively connected to at least one of the panels.

4. An airbag for protecting a vehicle occupant comprising:
an inner panel and an outer panel connected to form an inflatable chamber;
a cloth connecting element connected to the inner and outer panels at a position away from the periphery of the panels to thereby form a non-inflatable region located within the inflatable chamber;
wherein the connecting element includes two connecting cloths that interest to form an X shape.

5. An airbag for protecting a vehicle occupant comprising:
an inner panel and an outer panel connected to form an inflatable chamber;
a cloth connecting element connected to the inner and outer panels at a position away from the periphery of the panels to thereby form a non-inflatable region located within the inflatable chamber;
wherein the connecting element includes two connecting cloths; wherein the yams from the two connecting cloths intertwine to form a planar section located at the non-inflatable region of the airbag.

6. The airbag of claim 5, wherein a portion of each connecting cloth extends into the inflatable chamber on each side of the non-inflatable region.

7. The airbag of claim 5 or 6, wherein yams from at least one of the connecting cloths do not pass through the non-inflatable region.

8. The airbag of claim 5, 6 or 7, wherein a positioning hole is located in the planar region.

9. The airbag of claim 8, wherein the positioning hole passes through both the inner and outer panels.

10. The airbag of claim 7, wherein for each connecting cloth the ratio of the number of yams that pass through the planar section to the number yams that do not pass through the planar section is greater than one.

11. The airbag of any one of claims 5 to 10, wherein a portion of the yams are located in one of the connecting cloths on one side of the non-inflatable region and in the other connecting cloth on the other side of the non-inflatable region.

12. An airbag for protecting a vehicle occupant comprising:
an inner panel and an outer panel connected to form an inflatable chamber;
a cloth connecting element connected to the inner and outer panels at a position away from the periphery of the panels to thereby form a non-inflatable region located within the inflatable chamber;
wherein the connecting element includes four flaps extending from an intersection, each of said four flaps adapted to engage one surface of a pair of fabrics to be joined at a seam.

13. The airbag of claim 12, wherein said four flaps include:
a first weft arrangement extending through a first pair of flaps, said first pair of flaps including two opposing flaps of said four flaps;
a second weft arrangement extending through a second pair of flaps, said second pair of flaps including two remaining opposing flaps of said four flaps; and
a plurality of warp threads interlaced between each of said first weft arrangement and said second weft arrangement;
wherein said first weft arrangement and said second weft arrangement form said intersection.

14. The airbag of claim 13, wherein said first weft arrangement and said second weft arrangement include weft threads passing through said intersection.

15. The airbag of claim 13, wherein said first weft arrangement and said second weft arrangement include weft threads passing around a central region at said intersection.

16. The airbag of claim 15, wherein said central region contains a cylindrical filler extending in a direction perpendicular to a plane of said first weft arrangement and said second weft arrangement.

17. The airbag of any one of claims 12 to 16, wherein said four flaps include:
a first flap having a first weft arrangement with a first set of web threads and a second set of web threads;
a second flap having a second weft arrangement with said second set of web threads and a third set of web threads;
a third flap having a third weft arrangement with said third set of web threads and a fourth set of web thread;
a fourth flap having a fourth weft arrangement with said fourth set of web threads and said first set of web threads; and
a plurality of warp threads interlaced between each of said first weft arrangement, said second weft arrangement, said third weft arrangement, and said fourth weft arrangement.

18. The airbag of claim 17, wherein said first weft arrangement, said second weft arrangement, said third weft arrangement and said fourth weft arrangement include weft threads passing through said intersection.

19. The airbag of claim 17, wherein said first weft arrangement, said second weft arrangement, said third weft arrangement and said fourth weft arrangement include weft threads passing around a central region at said intersection.

20. The airbag of claim 19, wherein said central region contains a cylindrical filler extending in a direction perpendicular to a plane of said first weft arrangement, said second weft arrangement, said third weft arrangement and said fourth weft arrangement.

21. The airbag of any one of claims 15 to 20, wherein said central region includes a central thread interlacing said weft threads.

22. The airbag of any one of claims 13 to 21, wherein each flap extends at least 1 mm, preferably at least 15 mm from said intersection.

23. The airbag of claim 22, wherein each flap includes at least 5 warp threads, preferably least 7 warp threads.
